# EUROPEAN PATENT APPLICATION

(11) **EP 4 529 262 A1**
(43) Date of publication of application: **26.03.2025**
(21) Application number: 23806707.8
(22) Date of filing: 26.04.2023
(51) Int. Cl.: H04W 28/02

(54) **BSR TRIGGERING AND REPORTING METHOD, AND RESOURCE ALLOCATION METHOD AND APPARATUS**

(30) Priority: 16.05.2022 CN 202210531176
(71) Applicant: Datang Mobile Communications Equipment Co., Ltd., Beijing 100085 (CN)
(72) Inventor: CHEN, Li, Beijing 100085 (CN); BERTRAND, Pierre, Beijing 100085 (CN)
(74) Representative: Studio Torta S.p.A.
(86) International application number: PCT/CN2023/090887
(87) International publication number: WO 2023/221755

(57) **Abstract**

Embodiments of the present invention provide a BSR triggering and reporting method, and a resource allocation method and apparatus. The BSR triggering and reporting method comprises: determining a Packet Data Unit (PDU) set, the PDU set comprising one or more PDUs, and the PDUs in the PDU set having an association relationship; and triggering a BSR, and sending the BSR, the BSR comprising the remaining data volume of the PDU set. By determining the PDU set comprising one or more PDUs having a correlation, and triggering and sending the BSR comprising the remaining data volume, which is not transmitted, in the PDU set, a network side can allocate uplink transmission resources to a terminal in time on the basis of the remaining data volume, thereby ensuring the reliability of data transmission, ensuring low delay requirements of services, and saving resources.

## Description

### CROSS-REFERENCES TO RELATED APPLICATIONS

The present application claims priority to Chinese application No. 202210531176.4 filed on May 16, 2022, entitled "BSR Triggering and Reporting Method, and Resource Allocation Method and Apparatus", which is hereby incorporated by reference in its entirety.

### FIELD

The present application relates to the field of communications, and in particular, to a method and an apparatus for triggering and reporting a buffer status report (BSR), and a method and an apparatus for allocation resource.

### BACKGROUND

In a communication system, semi-persistent scheduling is used for a periodic service with a strict delay requirement.

For a service with a large change in a periodically arrived data frame, it would result in resource waste if too many pre-configured resources are allocated; and transmission requirements cannot be satisfied and would result in data packet loss if the pre-configured resources are less than a data amount in a current arriving frame.

### BRIEF SUMMARY

Embodiments of the present application provide a method and an apparatus for triggering and reporting buffer status report (BSR), and a method and an apparatus for allocating resource, which solves defects in the related art that services with large changes in periodically arrived data frames are prone to resources waste or data packet loss, ensures the reliability of data transmission, and saves resources.

An embodiment of the present application provides a method for triggering and reporting BSR, performed by a terminal, including:
determining a packet data unit (PDU) set, where the PDU set includes one or more PDUs, and the PDUs in the PDU set have an association relationship; and
triggering the BSR and transmitting the BSR, where the BSR includes a remaining data amount of the PDU set.

According to the method for triggering and reporting BSR provided by an embodiment of the present application, determining the PDU set includes at least one of the following items:
determining that the PDU set includes a PDU carrying a first PDU set sequence number (SN), where the first PDU set SN corresponds to the PDU set;
determining PDUs belonging to the PDU set from a start PDU to an end PDU in a first time period, where the start PDU is a first PDU having an association relationship with the end PDU, and the end PDU carries an end identifier, or a size of the end PDU is smaller than sizes of all PDUs prior to the end PDU in the first time period; or
determining that the PDU set includes PDUs belonging to a same service frame, or a same slice, or a same tile, or a same subpicture.

According to the method for triggering and reporting BSR provided by an embodiment of the present application, the remaining data amount of the PDU set includes at least one of the following items:
the remaining data amount of the PDU set after a medium access control (MAC) PDU containing the BSR being transmitted;
the remaining data amount of the PDU set after a first available preconfigured resource being used; or
the remaining data amount of the PDU set after a second available preconfigured resource and/or a dynamically scheduled resource being used.

According to the method for triggering and reporting BSR provided by an embodiment of the present application, triggering the BSR includes at least one of the following items:
triggering the BSR in case of determining that data in the PDU set are transmitted through a first uplink resource; or
triggering the BSR in case of determining that one or more preconfigured resources are not enough to accommodate all data in the PDU set; or
triggering the BSR in case of determining that a preconfigured resource and/or a dynamically scheduled resource in a second time period is not enough to accommodate all data in the PDU set.

According to the method for triggering and reporting BSR provided by an embodiment of the present application, transmitting the BSR includes:
transmitting the BSR through a first uplink resource, where the first uplink resource includes at least one of the following items:
a first uplink resource for transmitting data in the PDU set;
a last available preconfigured resource for transmitting data in the PDU set; or
a last available preconfigured resource or a dynamically scheduled resource for transmitting data in the PDU set.

According to the method for triggering and reporting BSR provided by an embodiment of the present application, transmitting the BSR includes:
transmitting the BSR through a BSR medium access control-control element (MAC-CE).

According to the method for triggering and reporting BSR provided by an embodiment of the present application, the BSR MAC-CE is in a first format,
where the first format includes: a buffer size field, a logical channel group (LCG) identifier (ID) and a logical channel identity (LCID),
where the buffer size field is used for indicating the remaining data amount of the PDU set;
the LCG ID is used for indicating an ID of a logical channel group to which a logical channel bearing the PDU set belongs; and
the LCID is used for characterizing that the BSR includes the remaining data amount of the PDU set.

According to the method for triggering and reporting BSR provided by an embodiment of the present application, the BSR MAC-CE is in a second format,
where the second format includes: at least one logical channel group (LCG) field, and a buffer size field corresponding to a first LCG field in the at least one LCG field,
where the first LCG field is used for indicating that BSR reporting exists in a logical channel group or a quality of service (QoS) flow corresponding to the first LCG field, the BSR is used for indicating the remaining data amount of the PDU set, and the buffer size field is used for indicating the remaining data amount of the PDU set in the logical channel group or the QoS flow corresponding to the first LCG field.

According to the method for triggering and reporting BSR provided by an embodiment of the present application, the LCG field has a value of 1.

According to the method for triggering and reporting BSR provided by an embodiment of the present application, in an MAC PDU to which the BSR MAC-CE belongs, the BSR MAC-CE is placed before a MAC sub-PDU containing uplink data, or after all MAC sub-PDUs other than padding.

According to the method for triggering and reporting BSR provided by an embodiment of the present application, the method further includes:
receiving enable indication information transmitted from a network side device, where the enable indication information is used for indicating the terminal to trigger and transmit the BSR based on a data radio bearer (DRB) or a logical channel or a service type or a PDU type corresponding to the enable indication information.

An embodiment of the present application further provides a method for resource allocation, performed by a network side device, including:
receiving a BSR, where the BSR includes a remaining data amount of the PDU set, the PDU set includes one or more PDUs, and the PDUs in the PDU set have an association relationship; and
allocating an uplink transmission resource to a terminal based on the remaining data amount of the PDU set.

An embodiment of the present application further provides a terminal, including a memory, a transceiver and a processor,
where the memory is used for storing a computer program, the transceiver is used for receiving and transmitting data under control of the processor, and the processor is used for reading the computer program stored in the memory and performing steps of the method for triggering and reporting BSR mentioned above.

An embodiment of the present application further provides a network side device, including a memory, a transceiver and a processor,
where the memory is used for storing a computer program, the transceiver is used for transmitting and receiving data under control of the processor, and the processor is used for reading the computer program stored in the memory and performing steps of the method for allocating resource described above.

An embodiment of the present application further provides an apparatus for triggering and reporting BSR, including:
a first determining module, used for determining a packet data unit (PDU) set, where the PDU set includes one or more PDUs, and the PDUs in the PDU set have an association relationship; and
a triggering and transmitting module, used for triggering the BSR and transmitting the BSR, where the BSR includes a remaining data amount of the PDU set.

An embodiment of the present application further provides an apparatus for allocating resource, including:
a first receiving module, used for receiving a BSR, where the BSR includes a remaining data amount of the PDU set, the PDU set includes one or more PDUs, and the PDUs in the PDU set have an association relationship; and
a resource allocating module, used for allocating an uplink transmission resource to a terminal based on the remaining data amount of the PDU set.

An embodiment of the present application further provides a processor-readable storage medium storing a computer program that cause a processor to perform the steps of the method for triggering and reporting BSR mentioned above.

An embodiment of the present application further provides a processor-readable storage medium storing a computer program that cause a processor to perform steps of the method for allocating resource described above.

In the method and apparatus for triggering and reporting BSR, and the method and apparatus for allocating resource provided by the embodiments of the present application, by determining a PDU set containing one or more associated PDUs, and triggering and transmitting the BSR containing the remaining data amount not transmitted in the PDU set, the network side may timely allocate uplink transmission resources to the terminal based on the remaining data amount, which ensures both the reliability of data transmission and the low latency requirements of the service, and saves resources.

### BRIEF DESCRIPTION OF THE DRAWINGS

In order to more clearly illustrate the solutions disclosed in the embodiments of the present disclosure or the related art, the drawings used in the descriptions of the embodiments or the related art will be briefly described below. The drawings in the following description are some embodiments of the present application, and other drawings may be obtained according to these drawings without any creative work for those skilled in the art.
FIG. 1 is a schematic diagram of modeling eXtened reality (XR) services based on a data frame according to the related art;
FIG. 2 is a schematic diagram of a relationship between an XR service frame and a packet data unit (PDU) according to the related art;
FIG. 3 is a schematic diagram of an uplink preconfigured resource according to the related art;
FIG. 4 is a schematic flow chart of a method for triggering and reporting a buffer status report (BSR) according to an embodiment of the present application;
FIG. 5 is a schematic diagram of a short BSR medium access control-control element (MAC-CE) according to an embodiment of the present application;
FIG. 6 is a schematic diagram of a MAC sub-protocol data unit (PDU) format according to an embodiment of the present application;
FIG. 7 is a schematic diagram of a long BSR MAC-CE according to an embodiment of the present application;
FIG. 8 is a schematic flow chart of a method for resource allocation according to an embodiment of the present application;
FIG. 9 is a schematic diagram of resource allocation according to an embodiment of the present application;
FIG. 10 is a schematic structural diagram of a terminal according to an embodiment of the present application.
FIG. 11 is a schematic structural diagram of a network side device according to an embodiment of the present application;
FIG. 12 is a schematic structural diagram of an apparatus for triggering and reporting BSR according to an embodiment of the present application; and
FIG. 13 is a schematic structural diagram of an apparatus for allocating resource according to an embodiment of the present application.

### DETAILED DESCRIPTION

In the embodiments of the present application, the term "and/or" describes a related relationship of associated objects, and indicates that there can be three kinds of relationships. For example, A and/or B can represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

The solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a user equipment and a network side device. The system may also include a core network part, such as an evolved packet system (EPS), a 5G system (5GS), and the like.

The terminal in the embodiments of the present application may be a device that provides voice and/or data connectivity to a user, a handheld device with a wireless connection function, or other processing device connected to a wireless modem. In different systems, the names of the terminal may be different. For example, in the 5G system, the terminal may be called as user equipment (UE). A radio terminal can communicate with one or more core networks (CN) via a radio access network (RAN), and the radio terminal can be a mobile terminal, such as a mobile phone (or "cellular" phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network side device involved in the embodiments of the present application may be a base station, and the base station may include a plurality of cells providing services for the terminal. Depending on the specific application, the network side device may also be called an access point, or may be a device in the access network that communicates with wireless terminal through one or more sectors on the air interface, or other names. Network device can be used to exchange received air frames with Internet Protocol (IP) packets, and act as a router between radio terminal and the rest of the access network, and the rest of the access network can include an Internet protocol (IP) communication network. The network side devices may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

The following content is introduced.

EXtended reality (XR), together with cloud game, is currently one of the most important 5G media applications, with low latency, high throughput and high reliability requirements. Large data transmission is required in a short time, which means that a burst throughput may be much higher than the average throughput in a short time. For example, the burst throughput of XR services with an average throughput of 100 Mbps in a short measurement window may reach 300 Mbps, and high reliability must be guaranteed simultaneously. XR is a general term for different types of reality that refers to a combination of real and virtual environments and human-computer interactions generated by computer technology and equipment. It includes representative forms such as augmented reality (AR), mixed reality (MR) and virtual reality (VR).

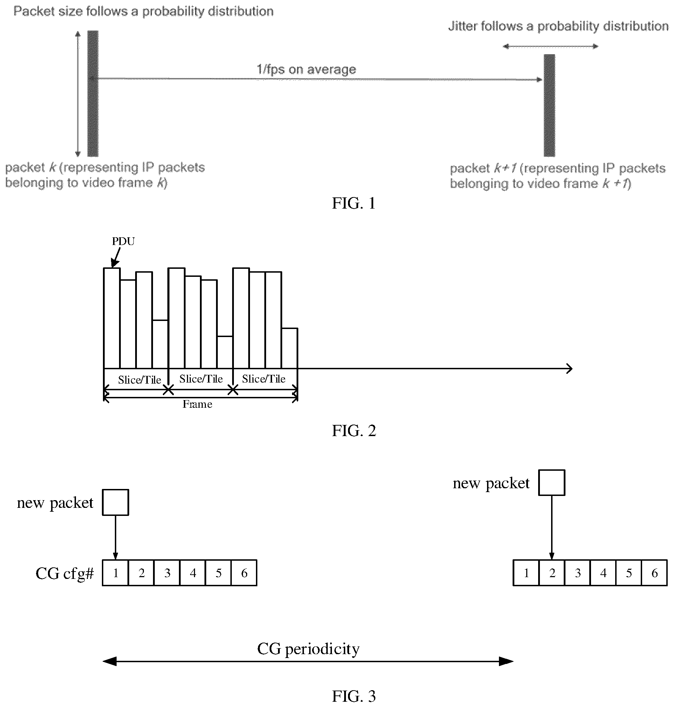

FIG. 1 is a schematic diagram of modeling XR services based on a data frame according to the related art, and FIG. 2 is a schematic diagram of a relationship between an XR service frame and a packet data unit (PDU) according to the related art. As shown in FIG. 1 and FIG. 2, each data frame corresponds to an XR video frame, and the same video frame may be divided into multiple PDUs.

In XR services, service characteristics are required for data frames. For example, for scenes and video mixed streams, the service characteristics are required as follows: period of 60 frames per second (fps); data rate of 10 Mbps/20 Mbps. A packet delay budget may include packet delay budget (PDB) of 30 ms, and may also include 10/15/60 ms.

XR services have three characteristics: periodicity; large data frames and large change in a size of an individual frame; and unpredictable jitter in a frame arrival time.

FIG. 3 is a schematic diagram of an uplink preconfigured resource according to the related art. As shown in FIG. 3, in a communication system, semi-persistent scheduling is used for periodic services with strict delay requirements. A base station pre-configures periodic resources for a terminal based on a service periodicity and a service data packet size. The uplink preconfigured resource is referred as to a configured grant (CG). Multiple uplink resources may be continuously allocated in one periodicity. The semi-persistent scheduling mechanism is very suitable for services with fixed data packet sizes such as VoIP. However, for services such as XR services where the periodically arrived data frames varies greatly, it would result in resource waste if too many preconfigured resources are allocated; and the terminal has to wait for the base station to allocate dynamic scheduling resources if the preconfigured resources are less than the data amount of the current arriving frame, but the base station will not allocate dynamic scheduled resources when the data amount of the terminal is uncertain.

There is an uplink buffer reporting mechanism in the related art. In case that the base station receives a buffer status report (BSR) reported from the terminal, it may allocate uplink resources having a corresponding size based on the BSR reported from the terminal. There are three types of BSRs: regular BSRs, periodic BSRs and padding BSRs.

The triggering mechanism of BSR in the related art is as follows.

Regular BSR: (1) the regular BSR is triggered when data having a higher priority than the data in the current buffer arrives or when data arrives in a current empty buffer; and (2) the regular BSR is triggered when a retxBSR-Timer expires and there is data in a buffer.

Periodic BSR: the periodic BSR is triggered when the periodicBSR-Timer expires.

Padding BSR: the padding BSR may be triggered in case that the uplink grant may accommodate more bits (padding) available for resources other than data to be transmitted in the uplink grant when the UE organizing the medium access control (MAC) PDU.

The BSR may not be triggered during the transmission of XR packet data.

Embodiments of the present application provide a method and an apparatus for triggering and reporting BSR, to ensure the reliability of data transmission and save resources.

The methods and the apparatuses are based on the same concept, the implementation of the apparatuses and the methods may be referred to each other since the principles of the methods and the apparatuses are similar, and the same parts would not be repeated.

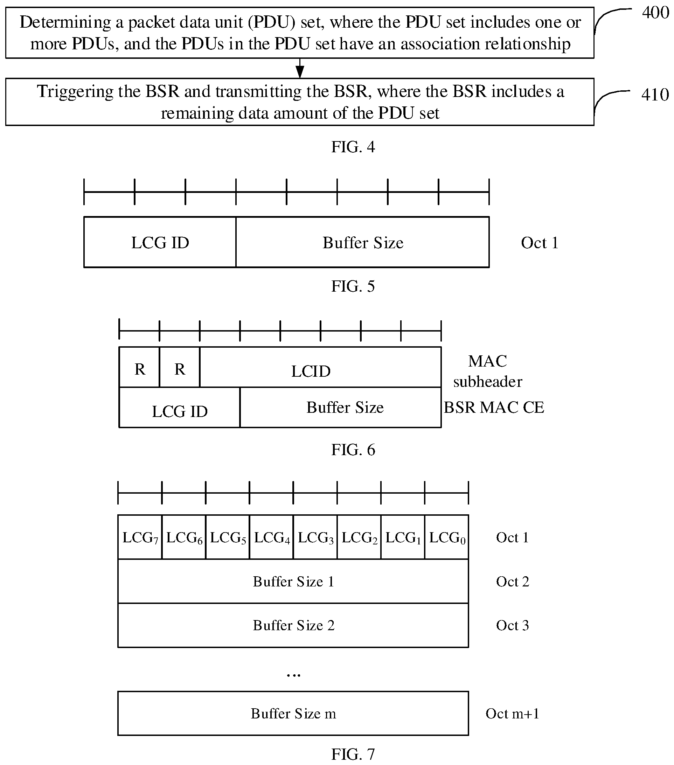

FIG. 4 is a schematic flow chart of a method for triggering and reporting the BSR according to an embodiment of the present application. The method is performed by a terminal and includes the steps as shown in FIG. 4.

Step 400: determining a packet data unit (PDU) set, where the PDU set includes one or more PDUs, and the PDUs in the PDU set have an association relationship.

Step 410: triggering the BSR and transmitting the BSR, where the BSR includes a remaining data amount of the PDU set.

In an embodiment, in order to ensure data transmission, the terminal may transmit the BSR to the network side device and report the remaining data amount that has not been transmitted to the network side device in case that part of the PDUs in a to-be-transmitted PDU set are unable to be transmitted temporarily due to insufficient uplink transmission resources. After obtaining the remaining data amount, the network side device may allocate uplink transmission resources to the terminal in time to ensure that part of the PDUs that are unable to be transmitted temporarily may be transmitted in time, increase the reliability of data transmission, and reduce the delay. There is no need to allocate too many resources to adapt to the occasional larger data, which may effectively save resources.

In an embodiment, the BSR containing the remaining data amount that has not been transmitted in the PDU set may also be referred as to a PDU set BSR.

In the method for triggering and reporting the BSR provided by the embodiment of the present application, by determining a PDU set containing one or more associated PDUs, and triggering and transmitting the BSR containing the remaining data amount not transmitted in the PDU set, the network side device may timely allocate uplink transmission resources to the terminal based on the remaining data amount, which ensures both the reliability of data transmission and the low latency requirements of the service, and saves resources.

In an embodiment, determining the PDU set includes at least one of the following items:
determining that the PDU set includes a PDU carrying a first PDU set sequence number (SN), where the first PDU set SN corresponds to the PDU set;
determining a PDU belonging to the PDU set from a PDU after a received previous end PDU to an end PDU received again, where the end PDU carries an end identifier;
determining a PDU belonging to the PDU set from the first PDU received in the first time period to a received end PDU, where a size of the end PDU is smaller than sizes of all PDUs prior to the end PDU in the first time period; or
determining that the PDU set includes PDUs belonging to a same service frame, or a same slice, or a same tile, or a same subpicture.

In an embodiment, the PDU in the PDU set may be referred as to an associated PDU.

In an embodiment of the present application, the associated PDUs may be grouped into a PDU set, and a receiver needs to receive all the PDUs in a PDU set to correctly parse the data frame.

In an embodiment, the PDUs (associated PDUs) belonging to a PDU set may be PDUs belonging to the same frame, the same slice, or the same tile (i.e., PDUs divided from the same frame/the same slice/the same tile).

In an embodiment, in case that a single PDU may be self-parsed, the "associated PDU" may be one PDU, that is, the PDU set may contain only one PDU. Correspondingly, in case that the transmission resource at the current moment cannot transmit all the data of the PDU, the PDU set BSR may be triggered and transmitted in the transmission resource.

In an embodiment, the first time period may be a given time period or a time period agreed in a protocol. It may be a time period with a given duration or a time period with a duration agreed in a protocol. It may also be a time period from the start of a certain service to the end of the service, or may also be a time period from the reception of a PDU of a certain service to the reception of an end PDU. It may also include all the time when the terminal is in the power-on state.

In an embodiment, the terminal may first identify the PDU set.

In an embodiment, the terminal determines (or identifies) a PDU set by any of the following modes.

Each PDU set has an independent first PDU set SN, and PDUs with the same first PDU set SN belong to the same PDU set. The first PDU set SN is added by the application layer, or the terminal adds the first PDU set SN by itself based on the higher layer (such as application layer/IP layer) data stream processing strategy issued by a core network.

The last PDU of each PDU set carries an end identifier, where the end identifier of the PDU set is added by the application layer, or the terminal adds the end identifier of the PDU set by itself based on the higher layer (such as application layer/IP layer) data stream processing strategy issued by a core network.

The terminal may take a first PDU, a last PDU and PDUs of the QoS flow between the first PDU and last PDU from the received first PDU to the last PDU whose size is significantly smaller than the previous PDU as a PDU set.

The terminal determines that the PDU set includes PDUs belonging to a same service frame, or a same slice, or a same tile, or a same subpicture.

In an embodiment, the remaining data amount of the PDU set includes at least one of the following items:
the remaining data amount of the PDU set after a medium access control (MAC) PDU containing the BSR being transmitted;
the remaining data amount of the PDU set after a first available preconfigured resource being used; or
the remaining data amount of the PDU set after a second available preconfigured resource and/or a dynamically scheduled resource being used.

In an embodiment, the remaining data amount indicated by the PDU set BSR may include at least one of the following:
the remaining data amount in the PDU set after the current MAC protocol data unit (PDU) (MAC PDU containing the PDU set BSR) being transmitted; or
the remaining data amount in the PDU set after the terminal using the current preconfigured resources (including subsequent preconfigured resources that have not been used by the terminal, which may be referred to as first available preconfigured resources); or
the remaining data amount in the PDU set after the terminal using the current estimated available resources (including preconfigured resources and dynamically scheduled resources, where the preconfigured resources may be referred to as second available preconfigured resources, which may include subsequent preconfigured resources that have not been used by the terminal)

In an embodiment, the first available preconfigured resources may be the same as the second available preconfigured resources.

In an embodiment, the first available preconfigured resources and the second available preconfigured resources may be different resources.

In an embodiment, triggering the BSR includes at least one of the following items:
triggering the BSR in case of determining that data in the PDU set are transmitted through a first uplink resource; or
triggering the BSR in case of determining that one or more preconfigured resources are not enough to accommodate all data in the PDU set; or
triggering the BSR in case of determining that a preconfigured resource and/or a dynamically scheduled resource in a second time period is not enough to accommodate all data in the PDU set.

In an embodiment, a triggering condition of the PDU set BSR of the PDU set may include at least one of the following.

The PDU set BSR is triggered when the terminal transmits a first PDU of the PDU set (such as a PDU set of an XR service).

The terminal determines whether the current preconfigured resource (the number of the preconfigured resources may be multiple) is enough to accommodate all the data in the PDU set. If the current preconfigured resource is enough to accommodate all the data in the PDU set, the PDU set BSR is not triggered; otherwise, the PDU set BSR is triggered.

The terminal determines whether the resources (including pre-configured resources and dynamically scheduled resources) in the current time period are enough to accommodate all the data in the PDU set. If the resources are enough to accommodate all the data in the PDU set, the PDU set BSR is not triggered; otherwise, the PDU set BSR is triggered.

In an embodiment, transmitting the BSR includes:
transmitting the BSR through a first uplink resource, where the first uplink resource includes at least one of the following items:
a first uplink resource for transmitting data in the PDU set;
a last available preconfigured resource for transmitting data in the PDU set; or
a last available preconfigured resource or a dynamically scheduled resource for transmitting data in the PDU set.

In an embodiment, the uplink resource for the terminal to transmit the PDU set BSR may be an uplink resource containing the first PDU in the PDU set, or a currently available last uplink resource containing the PDU set data.

In an embodiment, the currently available resources include available preconfigured resources.

In an embodiment, the currently available resources include preconfigured resources or dynamically scheduled resources.

In an embodiment, transmitting the BSR includes:
transmitting the BSR through a BSR medium access control-control element (MAC-CE).

In an embodiment, the terminal may report the remaining uplink data amount of the associated PDU through the BSR MAC-CE.

In an embodiment, the BSR MAC-CE is in a first format,
where the first format includes: a buffer size field, a logical channel group (LCG) identifier (ID) and a logical channel identity (LCID),
where the buffer size field is used for indicating the remaining data amount of the PDU set;
the LCG ID is used for indicating an ID of a logical channel group to which a logical channel bearing the PDU set belongs; and
the LCID is used for characterizing that the BSR includes the remaining data amount of the PDU set.

In an embodiment, the first format may be a short BSR MAC-CE format.

In an embodiment, the terminal may specifically report in a short BSR MAC-CE format.

FIG. 5 is a schematic diagram of the short MAC-CE according to an embodiment of the present application, and FIG. 6 is a schematic diagram of a MAC sub-protocol data unit (PDU) format according to an embodiment of the present application. As shown in FIG. 5 and FIG. 6, the complete MAC sub-PDU format including the BSR MAC-CE may include the buffer size field, the LCG ID, and the LCID.

The buffer size field may be used for indicating the remaining data amount of the current PDU set (i.e., PDU set).

The LCG ID may be used for indicating an ID of a logical channel group to which a logical channel bearing the current XR service belongs.

The LCID may be used for indicating an LCID of the short BSR MAC-CE, or a new LCID is dedicated to indicate that the current BSR reporting is a PDU set BSR.

In an embodiment, the BSR MAC-CE is in a second format,
where the second format includes: at least one logical channel group (LCG) field, and a buffer size field corresponding to a first LCG field in the at least one LCG field,
where the first LCG field is used for indicating that BSR reporting exists in a logical channel group or a quality of service (QoS) flow corresponding to the first LCG field, the BSR is used for indicating the remaining data amount of the PDU set, and the buffer size field is used for indicating the remaining data amount of the PDU set in the logical channel group or the QoS flow corresponding to the first LCG field.

In an embodiment, the second format may be a long BSR MAC-CE format.

In an embodiment, the terminal may specifically report in a long BSR MAC-CE format.

FIG. 7 is a schematic diagram of a long BSR MAC-CE according to an embodiment of the present application. As shown in FIG. 7, the MAC subheader format indicating the long BSR MAC-CE is the same as that indicating the short BSR MAC-CE, except that the specific LCID values are different. When the LCG field is a specific value, it may be referred as to the first LCG field, and the first LCG field may indicate that there is BSR reporting for indicating the remaining data amount of the PDU set in the logical channel group or a quality of service (QoS) flow corresponding to the first LCG field. When the LCG field is the first LCG field, there is one buffer size field corresponding to the first LCG field.

The buffer size field may be used for indicating the remaining data amount of the corresponding PDU set (i.e., PDU set).

The LCID in the corresponding MAC subheader may be used for indicating an LCID of the long BSR MAC-CE, or a new LCID is dedicated to indicate that the current BSR reporting is a PDU set BSR.

In an embodiment, the first LCG field may indicate that there is BSR reporting for indicating the remaining data amount of the PDU set in the logical channel group or the QoS flow corresponding to the first LCG field and the buffer size field corresponding to the first LCG field may indicate the remaining data amount of the PDU set of the logical channel group or the QoS flow corresponding to the LCG field.

In an embodiment, the first LCG field has a value of 1.

In an embodiment, in case that the LCG field has the value of 1, the LCG field may be referred as to the first LCG field, that is, it may indicate that there is BSR reporting for indicating the remaining data amount of the PDU set in the logical channel group or the QoS flow corresponding to the first LCG field and the buffer size field corresponding to the first LCG field may indicate the remaining data amount of the PDU set of the logical channel group or the QoS flow corresponding to the LCG field.

In an embodiment, in the MAC PDU to which the BSR MAC-CE belongs, the BSR MAC-CE is placed before the MAC sub-PDU containing uplink data, or after all MAC sub-PDUs other than padding.

In an embodiment, when organizing a MAC PDU, a BSR MAC-CE containing a PDU set BSR may be placed before a MAC sub-PDU containing uplink data, or after all MAC sub-PDUs other than padding.

In an embodiment, the method further includes:
receiving enable indication information transmitted from a network side device, where the enable indication information is used for indicating the terminal to trigger and transmit the BSR based on a data radio bearer (DRB) or a logical channel or a service type or a PDU type corresponding to the enable indication information.

In an embodiment, when configuring a data radio bearer (DRB) associated with an XR service for the terminal, the network side device may transmit enable indication information to the terminal, and the enable indication information may configure the terminal to trigger the PDU set BSR for the DRB or a logical channel or a logical channel group.

In an embodiment, the enable indication information is used for indicating whether the terminal is allowed to trigger and transmit the BSR based on the DRB or the logical channel or the service type or the PDU type corresponding to the enable indication information.

In an embodiment, the enable indication information is used for indicating that the terminal is allowed to trigger and transmit the BSR based on which DRB or logical channel or service type or PDU type corresponding to the enable indication information.

In the method for triggering and reporting the BSR provided by the embodiment of the present application, by determining a PDU set containing one or more associated PDUs, and triggering and transmitting the BSR containing the remaining data amount not transmitted in the PDU set, the network side device may timely allocate uplink transmission resources to the terminal based on the remaining data amount, which ensures both the reliability of data transmission and the low latency requirements of the service, and saves resources.

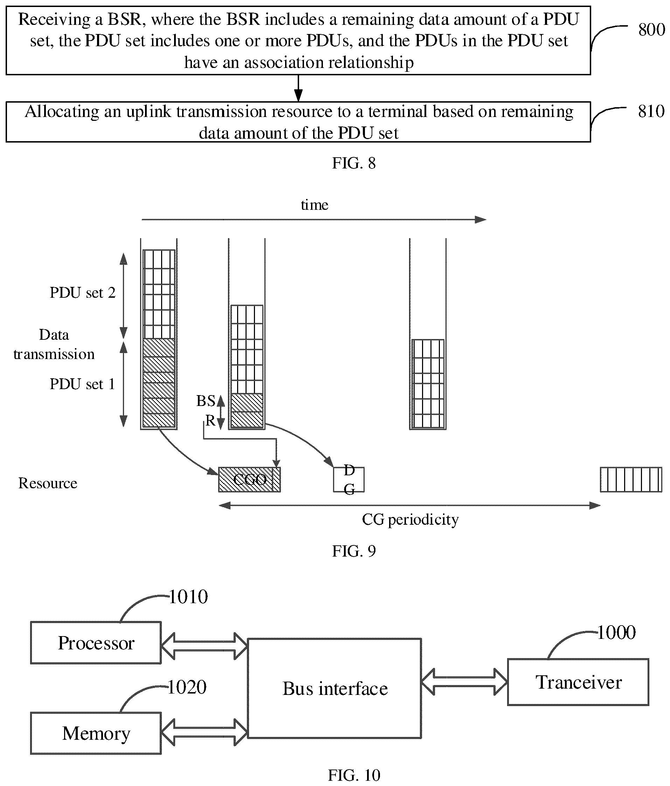

FIG. 8 is a schematic flow chart of a method for resource allocation according to an embodiment of the present application. The method is performed by a network side device and includes the following steps.

Step 800: receiving a BSR, where the BSR includes a remaining data amount of a PDU set, the PDU set includes one or more PDUs, and the PDUs in the PDU set have an association relationship.

Step 810: allocating an uplink transmission resource to a terminal based on the remaining data amount of the PDU set.

In an embodiment, the network side may receive the BSR transmitted from the terminal, and in case that there is a remaining data amount in the PDU set that has not been transmitted in the BSR, it may learn that part of the PDUs in the to-be-transmitted PDU set are unable to be transmitted temporarily due to insufficient uplink transmission resources. The network side device may allocate uplink transmission resources to the terminal in time based on the remaining data amount to ensure that part of the PDUs that are unable to be transmitted temporarily may be transmitted in time, increase the reliability of data transmission, and reduce the delay. There is no need to allocate too many resources to adapt to the occasional larger data, which may effectively save resources.

In an embodiment, the BSR containing the remaining data amount that has not been transmitted in the PDU set may also be referred as to a PDU set BSR.

In the method for allocating resource provided by the embodiment of the present application, by determining and receiving a BSR containing the remaining data amount not transmitted in the PDU set, uplink transmission resources are timely allocated to the terminal based on the remaining data amount, which ensures both the reliability of data transmission and the low latency requirements of the service, and saves resources.

In an embodiment, the terminal may report the PDU set BSR (only report the BSR for 1 PDU set) on a first CG resource;
the terminal may determine whether to trigger the PDU set BSR;
after triggering the PDU set BSR, the terminal calculates the remaining data amount indicated by the PDU set BSR and transmits a BSR MAC-CE containing the PDU set BSR; and
the base station side receives the uplink transmission containing the PDU set BSR MAC-CE from the terminal side, and the base station allocates uplink transmission resources to the terminal based on a buffered data amount included therein.

In an embodiment, the terminal may report the PDU set BSR (may report the BSR for multiple PDU sets) on a first CG resource;
the terminal may determine whether to trigger PDU set BSR; after triggering PDU set BSR, the terminal transmits BSR MAC-CE containing PDU set BSR, and multiple PDU set BSR MAC-CEs may be transmitted;
the base station side receives the uplink transmission containing the PDU set BSR MAC-CE from the terminal side, and the base station allocates uplink transmission resources to the terminal based on the buffered data amount included therein.

FIG. 9 is a schematic diagram of resource allocation according to an embodiment of the present application. As shown in FIG. 9, the terminal needs to transmit data in PDU set 1 and PDU set 2, and the preconfigured resources (CG occasion (CGO)) allocated by the base station are not enough to accommodate all the data of PDU set1 and PDU set 2. The terminal reports PDU set BSR MAC-CE on the last CG resource; the base station then allocates dynamically scheduled resources DG to the terminal based on the BSR report, and the terminal may quickly complete the transmission of the data in PDU set 1 and PDU set 2.

FIG. 10 is a schematic structural diagram of a terminal according to an embodiment of the present application. As shown in FIG. 10, the base station includes a memory 1020, a transceiver 1000 and a processor 1010,
where the memory 1020 is used for storing a computer program, the transceiver 1000 is used for receiving and transmitting data under control of the processor 1010, and the processor 1010 is used for reading the computer program in the memory 1020 and performing the following operations:
determining a packet data unit (PDU) set, where the PDU set includes one or more PDUs, and the PDUs in the PDU set have an association relationship; and
triggering the BSR and transmitting the BSR, where the BSR includes a remaining data amount of the PDU set.

In an embodiment, the transceiver 1000 is used for receiving and transmitting data under control of the processor 1010.

In FIG. 10, a bus architecture may include any number of interconnected buses and bridges, which are linked together through various circuits of one or more processors represented by processor 1010 and one or more memories represented by the memory 1020. The bus architecture may also link together various other circuits, such as peripherals, voltage regulators, and power management circuits, which are well known in the art, and therefore will not be further described in the present application. The bus interface provides an interface. Transceiver 1000 may be multiple elements, i.e., including a transmitter and a receiver, units for providing communication with various other devices over transmission media including wireless channels, wired channels, fiber optic cables, and the like.

The processor 1010 is responsible for managing the bus architecture and general processing, and the memory 1020 may store data used by the processor 1010 when performing operations.

In an embodiment, the processor 1010 may be a central processing unit (CPU), an application specific integrated circuit (ASIC), a field-programmable gate array (FPGA), or a complex programmable logic device (CPLD), the processor may also use a multi-core architecture.

The processor is configured to perform any one of the methods of the embodiments of the present application based on the obtained executable instructions by invoking the computer program stored in the memory. The processor and memory may also be physically separated.

In an embodiment, determining the PDU set includes at least one of the following items:
determining that the PDU set includes a PDU carrying a first PDU set sequence number (SN), where the first PDU set SN corresponds to the PDU set;
determining PDUs belonging to the PDU set from a start PDU to an end PDU in a first time period, where the start PDU is a first PDU having an association relationship with the end PDU, and the end PDU carries an end identifier, or a size of the end PDU is smaller than sizes of all PDUs prior to the end PDU in the first time period; or
determining that the PDU set includes PDUs belonging to a same service frame, or a same slice, or a same tile, or a same subpicture.

In an embodiment, the remaining data amount of the PDU set includes at least one of the following items:
the remaining data amount of the PDU set after a medium access control (MAC) PDU containing the BSR being transmitted;
the remaining data amount of the PDU set after a first available preconfigured resource being used; or
the remaining data amount of the PDU set after a second available preconfigured resource and/or a dynamically scheduled resource being used.

In an embodiment, the processor 1010 is used for at least one of the following items:
triggering the BSR in case of determining that data in the PDU set are transmitted through a first uplink resource;
triggering the BSR in case of determining that one or more preconfigured resources are not enough to accommodate all data in the PDU set; or
triggering the BSR in case of determining that a preconfigured resource and/or a dynamically scheduled resource in a second time period is not enough to accommodate all data in the PDU set.

In an embodiment, the processor 1010 is used for:
transmitting the BSR through a first uplink resource, where the first uplink resource includes at least one of the following items:
a first uplink resource for transmitting data in the PDU set;
a last available preconfigured resource for transmitting data in the PDU set; or
a last available preconfigured resource or a dynamically scheduled resource for transmitting data in the PDU set.

In an embodiment, the processor 1010 is used for:
transmitting the BSR through a BSR medium access control-control element (MAC-CE).

In an embodiment, the BSR MAC-CE is in a first format,
where the first format includes: a buffer size field, an LCG ID, and an LCID,
where the buffer size field is used for indicating the remaining data amount of the PDU set;
the LCG ID is used for indicating an ID of a logical channel group to which a logical channel bearing the PDU set belongs; and
the LCID is used for characterizing that the BSR includes the remaining data amount of the PDU set.

In an embodiment, the BSR MAC-CE is in a second format,
where the second format includes: at least one logical channel group (LCG) field, and a buffer size field corresponding to a first LCG field in the at least one LCG field,
where the first LCG field is used for indicating that BSR reporting exists in a logical channel group or a quality of service (QoS) flow corresponding to the first LCG field, the BSR is used for indicating the remaining data amount of the PDU set, and the buffer size field is used for indicating the remaining data amount of the PDU set in the logical channel group or the QoS flow corresponding to the first LCG field.

In an embodiment, the first LCG field has a value of 1.

In an embodiment, in the MAC PDU to which the BSR MAC-CE belongs, the BSR MAC-CE is placed before the MAC sub-PDU containing uplink data, or after all MAC sub-PDUs other than padding.

In an embodiment, the processor 1010 is used for:
receiving enable indication information transmitted from a network side device, where the enable indication information is used for indicating the terminal to trigger and transmit the BSR based on a data radio bearer (DRB) or a logical channel or a service type or a PDU type corresponding to the enable indication information.

It should be noted here that the above-mentioned terminal according to the embodiments of the present application may implement all the method steps implemented by the above-mentioned method embodiments performed by the terminal, and may achieve the same effect. The same parts and beneficial effects as the same method embodiments is not repeated in the present application.

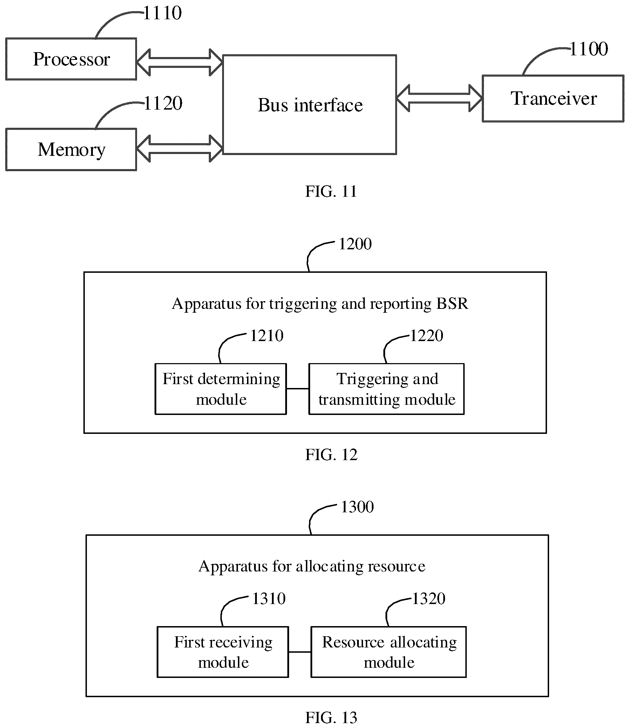

FIG. 11 is a schematic structural diagram of a network side device according to an embodiment of the present application. As shown in FIG. 11, the network side device includes a memory 1120, a transceiver 1100 and a processor 1110,
where the memory 1120 is used for storing a computer program, the transceiver 1100 is used for receiving and transmitting data under control of the processor 1110, and the processor 1110 is used for reading the computer program in the memory 1120 and performing the following operations:
receiving a BSR, where the BSR includes a remaining data amount of the PDU set, the PDU set includes one or more PDUs, and the PDUs in the PDU set have an association relationship; and
allocating an uplink transmission resource to a terminal based on the remaining data amount of the PDU set.

In an embodiment, the transceiver 1100 is used for receiving and transmitting data under control of the processor 1110.

In FIG. 11, a bus architecture may include any number of interconnected buses and bridges, which are linked together through various circuits of one or more processors represented by processor 1110 and one or more memories represented by the memory 1120. The bus architecture may also link together various other circuits, such as peripherals, voltage regulators, and power management circuits, which are well known in the art, and therefore will not be further described in the present application. The bus interface provides an interface. Transceiver 1100 may be multiple elements, i.e., including a transmitter and a receiver, units for providing communication with various other devices over transmission media including wireless channels, wired channels, fiber optic cables, and the like. The processor 1110 is responsible for managing the bus architecture and general processing, and the memory 1120 may store data used by the processor 1110 when performing operations.

The processor 1110 may be a central processing unit (CPU), an application specific integrated circuit (ASIC), a field-programmable gate array (FPGA), or a complex programmable logic device (CPLD), the processor may also use a multi-core architecture.

It should be noted here that the above-mentioned network side device according to the embodiments of the present application may implement all the method steps implemented by the above-mentioned method embodiments performed by the network side device, and may achieve the same effect. The same parts and beneficial effects as the same method embodiments is not repeated in the present application.

FIG. 12 is a schematic structural diagram of an apparatus for triggering and reporting BSR according to an embodiment of the present application. As shown in FIG. 12, the apparatus 1200 includes: a first determining module 1210 and a triggering and transmitting module 1220.

The first determining module 1210 is used for determining a packet data unit (PDU) set, where the PDU set includes one or more PDUs, and the PDUs in the PDU set have an association relationship.

The triggering and transmitting module 1220 is used for triggering the BSR and transmitting the BSR, where the BSR includes a remaining data amount of the PDU set.

In an embodiment, determining the PDU set includes at least one of the following items:
determining that the PDU set includes a PDU carrying a first PDU set sequence number (SN), where the first PDU set SN corresponds to the PDU set;
determining PDUs belonging to the PDU set from a start PDU to an end PDU in a first time period, where the start PDU is a first PDU having an association relationship with the end PDU, and the end PDU carries an end identifier, or a size of the end PDU is smaller than sizes of all PDUs prior to the end PDU in the first time period; or
determining that the PDU set includes PDUs belonging to a same service frame, or a same slice, or a same tile, or a same subpicture.

In an embodiment, the remaining data amount of the PDU set includes at least one of the following items:
the remaining data amount of the PDU set after a medium access control (MAC) PDU containing the BSR being transmitted;
the remaining data amount of the PDU set after a first available preconfigured resource being used; or
the remaining data amount of the PDU set after a second available preconfigured resource and/or a dynamically scheduled resource being used.

In an embodiment, the triggering and transmitting module 1220 is used for at least one of the following items:
triggering the BSR in case of determining that data in the PDU set are transmitted through a first uplink resource;
triggering the BSR in case of determining that one or more preconfigured resources are not enough to accommodate all data in the PDU set; or
triggering the BSR in case of determining that a preconfigured resource and/or a dynamically scheduled resource in a second time period is not enough to accommodate all data in the PDU set.

In an embodiment, the triggering and transmitting module 1220 is used for:
transmitting the BSR through a first uplink resource, where the first uplink resource includes at least one of the following items:
a first uplink resource for transmitting data in the PDU set;
a last available preconfigured resource for transmitting data in the PDU set; or
a last available preconfigured resource or a dynamically scheduled resource for transmitting data in the PDU set.

In an embodiment, the triggering and transmitting module 1220 is used for:
transmitting the BSR through a BSR medium access control-control element (MAC-CE).

In an embodiment, the BSR MAC-CE is in a first format,
where the first format includes: a buffer size field, an LCG ID, and an LCID,
where the buffer size field is used for indicating the remaining data amount of the PDU set;
the LCG ID is used for indicating an ID of a logical channel group to which a logical channel bearing the PDU set belongs; and
the LCID is used for characterizing that the BSR includes the remaining data amount of the PDU set.

In an embodiment, the BSR MAC-CE is in a second format,
where the second format includes: at least one logical channel group (LCG) field, and a buffer size field corresponding to a first LCG field in the at least one LCG field,
where the first LCG field is used for indicating that BSR reporting exists in a logical channel group or a quality of service (QoS) flow corresponding to the first LCG field, the BSR is used for indicating the remaining data amount of the PDU set, and the buffer size field is used for indicating the remaining data amount of the PDU set in the logical channel group or the QoS flow corresponding to the first LCG field.

In an embodiment, the first LCG field has a value of 1.

In an embodiment, in the MAC PDU to which the BSR MAC-CE belongs, the BSR MAC-CE is placed before the MAC sub-PDU containing uplink data, or after all MAC sub-PDUs other than padding.

In an embodiment, the apparatus further includes:
a second receiving module, used for receiving enable indication information transmitted from a network side device, where the enable indication information is used for indicating the terminal to trigger and transmit the BSR based on a data radio bearer (DRB) or a logical channel or a service type or a PDU type corresponding to the enable indication information.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that can store program codes such as U disk, mobile hard disk, read-only memory (ROM), random access memory (RAM), magnetic disk, or optical disk.

It should be noted here that the above-mentioned apparatus for triggering and reporting the BSR according to the embodiments of the present application can implement all the method steps implemented by the above-mentioned method embodiments, and can achieve the same effect. The same parts and beneficial effects as the same method embodiments would not be repeated here.

FIG. 13 is a schematic structural diagram of an apparatus for allocating resource according to an embodiment of the present application. As shown in FIG. 13, the apparatus 1300 includes: a first receiving module 1310 and a resource allocating module 1320.

The first receiving module 1310 is used for receiving a BSR, where the BSR includes a remaining data amount of the PDU set, the PDU set includes one or more PDUs, and the PDUs in the PDU set have an association relationship.

The resource allocating module 1320 is used for allocating an uplink transmission resource to a terminal based on the remaining data amount of the PDU set.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that can store program codes such as U disk, mobile hard disk, read-only memory (ROM), random access memory (RAM), magnetic disk, or optical disk.

It should be noted here that the above-mentioned apparatus for allocating resource according to the embodiment of the present application can implement all the method steps implemented by the above-mentioned method embodiments, and can achieve the same effect. The same parts and beneficial effects as the same method embodiments would not be repeated here.

An embodiment of the present disclosure further provides a processor-readable storage medium storing a computer program, the computer program causes a processor to perform the steps of the method for triggering and reporting BSR provided by the above embodiments.

An embodiment of the present disclosure further provides a processor-readable storage medium storing a computer program, the computer program causes a processor to perform the steps of the method for allocating resource provided by the above embodiments.

The computer readable storage medium can be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof can be implemented by computer-executable instructions. These computer-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions can also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for triggering and reporting buffer status report, BSR, performed by a terminal, comprising:
determining a packet data unit, PDU, set, wherein the PDU set comprises one or more PDUs, and the PDUs in the PDU set have an association relationship; and
triggering the BSR and transmitting the BSR.

2. The method of claim 1, wherein the BSR comprises a remaining data amount of the PDU set.

3. The method of claim 1, wherein determining the PDU set comprises at least one of the following items:
determining that the PDU set comprises a PDU carrying a first PDU set sequence number, SN, wherein the first PDU set SN corresponds to the PDU set;
determining PDUs belonging to the PDU set from a start PDU to an end PDU in a first time period, wherein the start PDU is a first PDU having an association relationship with the end PDU, and the end PDU carries an end identifier, or a size of the end PDU is smaller than sizes of all PDUs prior to the end PDU in the first time period; or
determining that the PDU set comprises PDUs belonging to a same service frame, or a same slice, or a same tile, or a same subpicture.

4. The method of any of claims 1 to 3, wherein the remaining data amount of the PDU set comprises at least one of the following items:
the remaining data amount of the PDU set after a medium access control, MAC, PDU containing the BSR being transmitted;
the remaining data amount of the PDU set after a first available preconfigured resource being used; or
the remaining data amount of the PDU set after a second available preconfigured resource and/or a dynamically scheduled resource being used.

5. The method of claim 1 or 4, wherein triggering the BSR comprises at least one of the following items:
triggering the BSR in case of determining that data in the PDU set are transmitted through a first uplink resource; or
triggering the BSR in case of determining that one or more preconfigured resources are not enough to accommodate all data in the PDU set; or
triggering the BSR in case of determining that a preconfigured resource and/or a dynamically scheduled resource in a second time period is not enough to accommodate all data in the PDU set.

6. The method of any of claims 1 to 5, wherein transmitting the BSR comprises:
transmitting the BSR through a first uplink resource, wherein the first uplink resource comprises at least one of the following items:
a first uplink resource for transmitting data in the PDU set;
a last available preconfigured resource for transmitting data in the PDU set; or
a last available preconfigured resource or a dynamically scheduled resource for transmitting data in the PDU set.

7. The method of any of claims 1 to 6, wherein transmitting the BSR comprises:
transmitting the BSR through a BSR medium access control-control element, MAC-CE.

8. The method of claim 7, wherein the BSR MAC-CE is in a first format,
wherein the first format comprises: a buffer size field, a logical channel group, LCG, identifier, ID, and a logical channel identity, LCID,
wherein the buffer size field is used for indicating the remaining data amount of the PDU set;
the LCG ID is used for indicating an ID of a logical channel group to which a logical channel bearing the PDU set belongs; and
the LCID is used for characterizing that the BSR comprises the remaining data amount of the PDU set.

9. The method of claim 7, wherein the BSR MAC-CE is in a second format,
wherein the second format comprises: at least one logical channel group, LCG, field, and a buffer size field corresponding to a first LCG field in the at least one LCG field,
wherein the first LCG field is used for indicating that BSR reporting exists in a logical channel group or a quality of service, QoS, flow corresponding to the first LCG field, the BSR is used for indicating the remaining data amount of the PDU set, and the buffer size field is used for indicating the remaining data amount of the PDU set in the logical channel group or the QoS flow corresponding to the first LCG field.

10. The method of claim 9, wherein the LCG field has a value of 1.

11. The method of any of claims 6 to 10, wherein in an MAC PDU to which the BSR MAC-CE belongs, the BSR MAC-CE is placed before a MAC sub-PDU containing uplink data, or after all MAC sub-PDUs other than padding.

12. The method of any of claims 1 to 11, further comprising:
receiving enable indication information transmitted from a network side device, wherein the enable indication information is used for indicating the terminal to trigger and transmit the BSR based on a data radio bearer, DRB, or a logical channel or a service type or a PDU type corresponding to the enable indication information.

13. A method for allocating resource, performed by a network side device, comprising:
receiving a buffer status report, BSR, wherein a packet data unit, PDU, set comprised in the BSR comprises one or more PDUs, and the PDUs in the PDU set have an association relationship; and
allocating an uplink transmission resource to a terminal based on remaining data amount of the PDU set.

14. The method of claim 13, wherein the BSR comprises the remaining data amount of the PDU set.

15. A terminal, comprising a memory, a transceiver and a processor,
wherein the memory is used for storing a computer program, the transceiver is used for receiving and transmitting data under control of the processor, and the processor is used for reading the computer program stored in the memory and performing the following operations:
determining a packet data unit, PDU, set, wherein the PDU set comprises one or more PDUs, and the PDUs in the PDU set have an association relationship; and
triggering the BSR and transmitting the BSR.

16. The terminal of claim 15, wherein the BSR comprises a remaining data amount of the PDU set.

17. The terminal of claim 15, wherein determining the PDU set comprises at least one of the following items:
determining that the PDU set comprises a PDU carrying a first PDU set sequence number, SN, wherein the first PDU set SN corresponds to the PDU set;
determining PDUs belonging to the PDU set from a start PDU to an end PDU in a first time period, wherein the start PDU is a first PDU having an association relationship with the end PDU, and the end PDU carries an end identifier, or a size of the end PDU is smaller than sizes of all PDUs prior to the end PDU in the first time period; or
determining that the PDU set comprises PDUs belonging to a same service frame, or a same slice, or a same tile, or a same subpicture.

18. The terminal of any of claims 15 to 17, wherein the remaining data amount of the PDU set comprises at least one of the following items:
the remaining data amount of the PDU set after a medium access control, MAC, PDU containing the BSR being transmitted;
the remaining data amount of the PDU set after a first available preconfigured resource being used; or
the remaining data amount of the PDU set after a second available preconfigured resource and/or a dynamically scheduled resource being used.

19. The terminal of claim 15 or 18, wherein triggering the BSR comprises at least one of the following items:
triggering the BSR in case of determining that data in the PDU set are transmitted through a first uplink resource; or
triggering the BSR in case of determining that one or more preconfigured resources are not enough to accommodate all data in the PDU set; or
triggering the BSR in case of determining that a preconfigured resource and/or a dynamically scheduled resource in a second time period is not enough to accommodate all data in the PDU set.

20. The terminal of any of claims 15 to 19, wherein transmitting the BSR comprises:
transmitting the BSR through a first uplink resource, wherein the first uplink resource comprises at least one of the following items:
a first uplink resource for transmitting data in the PDU set;
a last available preconfigured resource for transmitting data in the PDU set; or
a last available preconfigured resource or a dynamically scheduled resource for transmitting data in the PDU set.

21. The terminal of any of claims 15 to 20, wherein transmitting the BSR comprises:
transmitting the BSR through a BSR medium access control-control element, MAC-CE.

22. The terminal of claim 21, wherein the BSR MAC-CE is in a first format,
wherein the first format comprises: a buffer size field, a logical channel group, LCG, identifier, ID, and a logical channel identity, LCID,
wherein the buffer size field is used for indicating the remaining data amount of the PDU set;
the LCG ID is used for indicating an ID of a logical channel group to which a logical channel bearing the PDU set belongs; and
the LCID is used for characterizing that the BSR comprises the remaining data amount of the PDU set.

23. The terminal of claim 21, wherein the BSR MAC-CE is in a second format,
wherein the second format comprises: at least one logical channel group, LCG, field, and a buffer size field corresponding to a first LCG field in the at least one LCG field,
wherein the first LCG field is used for indicating that BSR reporting exists in a logical channel group or a quality of service, QoS, flow corresponding to the first LCG field, the BSR is used for indicating the remaining data amount of the PDU set, and the buffer size field is used for indicating the remaining data amount of the PDU set in the logical channel group or the QoS flow corresponding to the first LCG field.

24. The terminal of claim 23, wherein the LCG field has a value of 1.

25. The terminal of any of claims 20 to 24, wherein in an MAC PDU to which the BSR MAC-CE belongs, the BSR MAC-CE is placed before a MAC sub-PDU containing uplink data, or after all MAC sub-PDUs other than padding.

26. The terminal of any of claims 15 to 25, wherein the operations further comprise:
receiving enable indication information transmitted from a network side device, wherein the enable indication information is used for indicating the terminal to trigger and transmit the BSR based on a data radio bearer, DRB, or a logical channel or a service type or a PDU type corresponding to the enable indication information.

27. A network side device, comprising a memory, a transceiver and a processor,
wherein the memory is used for storing a computer program, the transceiver is used for receiving and transmitting data under control of the processor, and the processor is used for reading the computer program stored in the memory and performing the following operations:
receiving a buffer status report, BSR, wherein a packet data unit, PDU, set comprised in the BSR comprises one or more PDUs, and the PDUs in the PDU set have an association relationship; and
allocating an uplink transmission resource to a terminal based on remaining data amount of the PDU set.

28. The network side device of claim 27, wherein the BSR comprises a remaining data amount of the PDU set.

29. An apparatus for triggering and reporting buffer status report, BSR, comprising:
a first determining module, used for determining a packet data unit, PDU, set, wherein the PDU set comprises one or more PDUs, and the PDUs in the PDU set have an association relationship; and
a triggering and transmitting module, used for triggering the BSR and transmitting the BSR.

30. The apparatus of claim 29, wherein the BSR comprises a remaining data amount of the PDU set.

31. The apparatus of claim 29, wherein the first determining unit is used for at least one of the following items:
determining that the PDU set comprises a PDU carrying a first PDU set sequence number, SN, wherein the first PDU set SN corresponds to the PDU set;
determining PDUs belonging to the PDU set from a start PDU to an end PDU in a first time period, wherein the start PDU is a first PDU having an association relationship with the end PDU, and the end PDU carries an end identifier, or a size of the end PDU is smaller than sizes of all PDUs prior to the end PDU in the first time period; or
determining that the PDU set comprises PDUs belonging to a same service frame, or a same slice, or a same tile, or a same subpicture.

32. The apparatus of any of claims 29 to 31, wherein the remaining data amount of the PDU set comprises at least one of the following items:
the remaining data amount of the PDU set after a medium access control, MAC, PDU containing the BSR being transmitted;
the remaining data amount of the PDU set after a first available preconfigured resource being used; or
the remaining data amount of the PDU set after a second available preconfigured resource and/or a dynamically scheduled resource being used.

33. The apparatus of claim 29 or 32, wherein the triggering and transmitting module 1220 is used for at least one of the following items:
triggering the BSR in case of determining that data in the PDU set are transmitted through a first uplink resource;
triggering the BSR in case of determining that one or more preconfigured resources are not enough to accommodate all data in the PDU set; or
triggering the BSR in case of determining that a preconfigured resource and/or a dynamically scheduled resource in a second time period is not enough to accommodate all data in the PDU set.

34. The apparatus of any of claims 29 to 33, wherein the triggering and transmitting module 1220 is used for:
transmitting the BSR through a first uplink resource, wherein the first uplink resource comprises at least one of the following items:
a first uplink resource for transmitting data in the PDU set;
a last available preconfigured resource for transmitting data in the PDU set; or
a last available preconfigured resource or a dynamically scheduled resource for transmitting data in the PDU set.

35. The apparatus of any of claims 29 to 34, wherein the triggering and transmitting module 1220 is used for:
transmitting the BSR through a BSR medium access control-control element, MAC-CE.

36. The apparatus of claim 35, wherein the BSR MAC-CE is in a first format,
wherein the first format comprises: a buffer size field, a logical channel group, LCG, identifier, ID, and a logical channel identity, LCID,
wherein the buffer size field is used for indicating the remaining data amount of the PDU set;
the LCG ID is used for indicating an ID of a logical channel group to which a logical channel bearing the PDU set belongs; and
the LCID is used for characterizing that the BSR comprises the remaining data amount of the PDU set.

37. The apparatus of claim 35, wherein the BSR MAC-CE is in a second format,
wherein the second format comprises: at least one logical channel group, LCG, field, and a buffer size field corresponding to a first LCG field in the at least one LCG field,
wherein the first LCG field is used for indicating that BSR reporting exists in a logical channel group or a quality of service, QoS, flow corresponding to the first LCG field, the BSR is used for indicating the remaining data amount of the PDU set, and the buffer size field is used for indicating the remaining data amount of the PDU set in the logical channel group or the QoS flow corresponding to the first LCG field.

38. The apparatus of claim 37, wherein the LCG field has a value of 1.

39. The apparatus of any of claims 34 to 38, wherein in an MAC PDU to which the BSR MAC-CE belongs, the BSR MAC-CE is placed before a MAC sub-PDU containing uplink data, or after all MAC sub-PDUs other than padding.

40. The apparatus of any of claims 29 to 39, further comprising:
a second receiving module, used for receiving enable indication information transmitted from a network side device, wherein the enable indication information is used for indicating the terminal to trigger and transmit the BSR based on a data radio bearer, DRB, or a logical channel or a service type or a PDU type corresponding to the enable indication information.

41. An apparatus for allocating resource, comprising:
a first receiving module, used for receiving a buffer status report, BSR, wherein a packet data unit, PDU, set comprised in the BSR comprises one or more PDUs, and the PDUs in the PDU set have an association relationship; and
a resource allocating module, used for allocating an uplink transmission resource to a terminal based on remaining data amount of the PDU set.

42. The apparatus of claim 41, wherein the BSR comprises the remaining data amount of the PDU set.

43. A processor-readable storage medium storing a computer program, wherein the computer program causes a processor to perform the method of any of claims 1 to 14.
